# EUROPEAN PATENT SPECIFICATION

(11) **EP 1 862 477 B1**
(45) Date of publication and mention of the grant of the patent: **06.03.2013**
(21) Application number: 07010189.4
(22) Date of filing: 23.05.2007
(51) Int. Cl.: C08C 19/02

(54) **Process for preparing hydrogenated nitrile rubbers**
Verfahren zur Herstellung von hydriertem Nitrilkautschuk
Procédé de préparation de caoutchouc nitrile hydrogéné

(30) Priority: 01.06.2006 EP 06011379
(43) Date of publication of application: 05.12.2007
(73) Proprietor: LANXESS Deutschland GmbH, 51369 Leverkusen (DE)
(72) Inventor: Ong, Christopher, Dr., 51375 Leverkusen (DE); Pask, Stephen, Dr., 41542 Dormagen (DE); Guo, Sharon X., Dr., Pungong Shanghai 201204 (CN); Mersmann, Franz, 51467 Bergisch Gladbach (DE)

(56) References cited:
- US-A- 1 284 488
- US-A- 4 581 417

## Description

The invention relates to a new process for the preparation of hydrogenated nitrile rubbers by hydrogenation of nitrile rubbers using a specific type of reactor.

Hydrogenated nitrile rubber ("HNBR"), is generally prepared by the selective hydrogenation of a nitrile rubber ("NBR") which is a co-polymer comprising repeating units of at least one conjugated diene, at least one α,β-unsaturated nitrile and optionally further comonomers. HNBR represents a specialty rubber which has very good heat resistance, excellent ozone and chemical resistance, as well as excellent oil resistance. Coupled with the high level of mechanical properties of the rubber, in particular the high resistance to abrasion, it is not surprising that NBR as well as HNBR have found widespread use in the automotive (seals, hoses, bearing pads) oil (stators, well head seals, valve plates), electrical (cable sheathing), mechanical engineering (wheels, rollers) and shipbuilding (pipe seals, couplings) industries, amongst others.

In general commercially available HNBR has a Mooney viscosity (ML 1+4 @100 °C) in the range of from 55 to 120 (determined using ASTM test D1646), a molecular weight M_{w} in the range of from 200,000 to 500,000, a polydispersity greater than 3.0 and a residual double bond (RDB) content of up to 18% (determined by IR spectroscopy).

In recent times it has been disclosed in WO-A-02/100941 and WO-A-02/100905 that a low Mooney HNBR may be prepared by using a combination of a metathesis reaction and a subsequent hydrogenation. Such low Mooney HNBR has a Mooney viscosity (ML 1+4 @100 °C) in the range of from 2 to 50, a molecular weight M_{w} in the range of from 30.000 to 250.000, and a polydispersity index of typically less than 3.

The priniciple technique of hydrogenating NBR is known to any artisan and well described in literature. In Macromolecules, 1957, 20, 2362 N.A. Mohammadi and G.L. Rempel describe the homogeneous selective catalytic hydrogenation of C=C double bounds in acrylonitrile-butadiene copolymers. Specifically examined is the hydrogenation of NBR utilizing Wilkinson's catalyst [RhCl(P(C₆H₅)₃)₃]. A spectroscopic analysis of NBR and HNBR was performed and compared in order to understand the fundamental changes to the polymer resulting from the hydrogenation process. In Rev. Macromol. Chem. Phys., 1995, C35(2), 239-285 N.T. McManus and G.L. Rempel describe catalytic hydrogenation and related reactions, covering the hydrogenation of polymers in general (NBR, SBR, polybutadiene) using several different catalyst systems, e.g. based on Rh, Ru, Pd and Ir, capable of performing polymer hydrogenation.

Presently the hydrogenation of NBR on a large commercial scale is carried out batch-wise using either homogenous or heterogeneous catalysts. Such batch-production is linked to some disadvantages. With regard to the homogeneous catalysts one disadvantage of major importance is due to the fact that the hydrogenation process of NBR is mass diffusion controlled. Therefore the ability of the homogeneous catalyst to efficiently locate and hydrogenate the double bonds of the NBR is limiting to the present batch process commercially, leading to very high manufacturing costs. Additionally the diffusion problem also applies to the hydrogen, as it is only slightly soluble in monochlorobenzene, which is the predominantely used solvent in such hydrogenation. To get enough hydrogen into the solution to perform the hydrogenation reaction requires massive pressure in the range of from 65 to 90 bar.

Additionally the most obvious characteristic of a batch hydrogenation reactor is that it produces HNBR batches which results in a specific quantity, usually dictated by the process equipment. If customers want smaller quantities than the batch size then stocks and warehousing is required. Also, the introduction of new HNBR grades into the market may be a problem, as the batch size is very likely much larger than the trial quantities required. This results in either utilization of expensive warehousing or the necessity to establish small pilot plant facilities to produce smaller quantities for trial sampling.

Most batch hydrogenation reactors are utilized for the production of a variety of different HNBR grades. The need for cleaning the reactor between different batches therefore becomes an issue. Not only does cleaning take time, but there is often associated cost of material loss and the need perhaps to dispose of cleaning solvents. Therefore, companies tend to minimize grade changes and once more there is a demand to build product inventory to satisfy customer requirements. New grades and products can be difficult to introduce with large stocks of old material in store. Furtheron, warehouses are expensive not just due to the building and operation overhead expenses but also due to the amount of working capital tied up.

The current batch-wise hydrogenation has the additional disadvantage that the reaction needs to be carried out at very high hydrogen pressures, e.g. at a pressure above 80 bar. This results in extensive and expensive safety requirements that need to be met by both the reactor and surrounding equipment.

The object of the present invention was therefore to provide a process being less demanding with regard to its reaction conditions, like e.g. the hydrogen pressure to be applied, and to further reduce the cost of the hydrogenation process and in particular the equipment cost.

This object was solved by providing a new process for preparing hydrogenated nitrile rubbers by subjecting nitrile rubbers in a spinning disk reactor to hydrogenation.

The starting polymer to be used in the new process is a nitrile rubber ("NBR").

As used throughout this specification, the term **"nitrile rubber" or "NBR"** is intended to have a broad meaning and is meant to encompass an elastomer having repeating units derived from at least one conjugated diene, at least one α,β-unsaturated nitrile, and optionally one or more copolymerizable monomers.

The conjugated diene may be any known conjugated diene, preferably a C₄-C₆ conjugated diene. Preferred conjugated dienes are 1,3-butadiene, isoprene, piperylene, 2,3-dimethyl butadiene and mixtures thereof. Even more preferred C₄-C₆ conjugated dienes are 1,3-butadiene, isoprene and mixtures thereof. The most preferred C₄-C₆ conjugated diene is 1,3-butadiene.

The α,β-unsaturated nitrile may be any known α,β-unsaturated nitrile, preferably a (C₃-C₅) α ,β-unsaturated nitrile. Preferred (C₃-C₅) α,β-unsaturated nitriles are acrylonitrile, methacrylonitrile, ethacrylonitrile and mixtures thereof. The most preferred (C₃-C₅) α ,β-unsaturated nitrile is acrylonitrile.

A very preferred nitrile rubber is a copolymer of acrylonitrile and 1,3-butadiene.

Besides the repeating units derived from the conjugated diene and the α,β-unsaturated nitrile the nitrile rubber may optionally further contain repeating units derived from one or more copolymerizable monomers, such as e.g. α,β-unsaturated mono- or dicarboxylic acids, their esters or amides. As α,β-unsaturated mono- or dicarboxylic acids fumaric acid, maleic acid, acrylic acid and methacrylic acid are preferred. As esters of α,β-unsaturated carboxylic acids alkyl esters and alkoxyalkyl esters are preferred. More preferred alkyl esters of α ,β-unsaturated carboxylic acids are methyl acrylate, ethyl acrylate, butyl acrylate, butyl methacrylate, 2-ethylhexyl acrylate, 2-ethylhexyl methacrylate and octyl acrylate. More preferred alkoxyalkyl esters of α,β-unsaturated carboxylic acids are methoxyethyl (meth)acrylate, ethoxyethyl (meth)acrylate and methoxyethyl (meth)acrylate. It is also possible to use mixtures of alkyl esters, like the aforementioned, and alkoxyalkyl esters, like the aforementioned.

The percentages of the repeating units derived from the conjugated diene and the α ,β-unsaturated nitrile may vary broadly in the nitrile rubber. Typically the nitrile rubber contains in the range of from 40 to 90 % b.w., preferably in the range of from 60 to 85 % b.w of the conjugated diene, based on the nitrile rubber, and in the range of from 10 to 60 % b.w., preferably in the range of from 15 to 40 % b.w. of the α,β-unsaturated nitrile, based on the nitrile rubber. Repeating units derived from one or more copolymerizable monomers will replace either the nitrile or the diene portion of the nitrile rubber and it will be apparent to the skilled in the art that the above mentioned figures will have to be adjusted to result in 100 % b.w. Optionally such additional monomers are present in an amount of from 0 to 40 % b.w., preferably of from 0,1 to 40 % b.w and more preferably of from 1 to 30 % b.w., based on the nitrile rubber.

The production process of NBR by polymerizing the aformentioned monomers is well known to any artisan and described in polymer literature in detailed form.

Commercially available NBR is typically manufactured by emulsion polymerization. The monomers are emulsified in water, a free radical-generating catalyst is added and the mixture is agitated whilst a constant temperature is maintained. After the desired degree of polymerization is reached, a shortstop and stabilizers are added to the reaction system causing termination of the polymerization process. Generally, NBR obtained by this process has a Mooney viscosity (ML 1+4 @100 °C) in the range of from 30 to 90, preferably in the range of from 30 to 70, more preferably in the range of from 30 to 50, a molecular weight Mw in the range of from 200,000 to 500.000, preferably in the range of from 200.000 to 400,000, a molecular weight Mn in the range of from 80,000 to 150,000 and a polydispersity index PDI in the range of from 2,0 to 6,0, preferably in the range of from 2,0 to 4,0.

The Mooney viscosity (ML 1+4 @100 °C) of the rubber is generally determined using ASTM test D1646.

In addition, so-called "liquid NBR" having a very low viscosity and a low molecular weight can be produced by adding the shortstop agent early in the reaction process. As in the case of regular NBR, the resulting liquid NBR has a polydispersity PDI greater than 3.0. The viscosity is typically not measured anymore according to Mooney, but determined by solution viscosity (i.e. by using a Brookfield viscometer).

NBR suited as starting material of the novel process may either be prepared pursuant to the described known polymerization techniques or be purchased, e.g. with different grades of the product line Perbunan® and Krynac^{®} available from Lanxess Deutschland GmbH.

The hydrogenation of nitrile rubbers pursuant to the process of the present application is preferably carried out in the presence of a hydrogenation catalyst, more preferably in the presence of a homogeneous hydrogenation catalyst. Rhodium, ruthenium, titanium, platinum, iridium, palladium, rhenium, osmium, cobalt or copper may be used either as metal or preferably in form of suitable metal compounds (see e.g. US-A-3,700,637, DE-A-25 39 132, EP-A-0,134,023, DE-OS-35 41 689, DE-OS-35 40 918, EP-A-0 298 386, DE-OS-35 29 252, DE-OS-34 33 392, US-A-4,464,515 and US-A-4,503,196 as far as the hydrogenation catalysts and the preparation thereof is concerned).

The hydrogenation is for example carried out in the presence of a rhodium or ruthenium containing catalyst. Suitable are for example catalysts of the following general formula (I)

(R¹ₘB)ₗMXₙ (I)

wherein
- M: is ruthenium or rhodium,
- R': are different or equal and represent C₁-C₈-alkyl, C₄-C₈-cycloalkyl, C₆-C₁₅-aryl or C₇-C₁₅-aralkyl,
- B: is phosphorus, arsenic, sulphur or a sulphoxide group (S=O),
- X: is hydrogen or an anion, preferably halogen and more preferably chlorine or bromine,
- 1: is 2, 3 or 4,
- m: is 2 or 3 and
- n: is 1, 2 or 3, preferably 1 or 3.

Preferred catalysts are tris(triphenylphosphine)-rhodium(I)-chloride, tris(triphenylphosphine)-rhodium(III)-chloride, tris(dimethylsulfoxid)-rhodium(III)-chloride, tetrakis(triphenyl phosphine)-rhodium-hydride, and the corresponding compounds in which the triphenylphosphine moiety is partially or completely replaced by tricyclohexylphosphine.

The catalyst can be used in small amounts. Typically an amount in the range from 0,005 - 1 % by weight, preferably in the range from 0,01 - 0,5 % by weight and more preferably in the range from 0,02 - 0,1 % by weight based on the weight of the nitrile rubber is used.

Generally it is helpful to use the catalyst together with a co-catalyst. Such co-catalyst has typically the general formula (II)

R¹ₘB (II)

wherein R', m and B shall have the same meanings as for the general formula (I) of the catalyst. Preferably a co-catalyst of formula (II) is used in which m is 3, B is phosphorus and the substituents R' are different or equal and represent C₁-C₈-alkyl, C₄-C₈-cycloalkyl, C₆-C₁₅-aryl or C₇-C₁₅-aralkyl. More preferably the co-catalyst posesses trialkyl, tricycloalkyl, triaryl, triaralkyl, diaryl-monoalkyl, diaryl-monocycloalkyl, dialkyl-monoaryl, dialkyl-monocycloalkyl, dicycloalkyl-monoaryl or dicycloalkyl-monoaryl substituents, wherein "alkyl" means C₁-C₈-alkyl, "cycloalkyl" means C₄-C₈-cycloalkyl, and "aryl" means C₆-C₁₅-aryl.

Examples of co-catalysts are described in US-A-4,631,315, a preferred co-catalyst is triphenylphosphine.

Typically 0,1 to 33 % b.w. of the co-catalyst, preferably 0,5 to 20 % b.w. and even more preferably 0,5 to 5 % b.w. of the co-catalyst are used based on 100 % b.w. of the nitrile rubber to be hydrogenated.

Preferably the amount of catalyst and co-catalyst is chosen within the above mentioned ranges in such a way that the weight ratio of the catalyst to the co-catalyst lies in the range of from 1 : (3 -55), and even more preferably in the range of from 1: (5-45) based on 100 parts by weight of the nitrile rubber to be hydrogenated.

The novel process is carried out using a Spinning Disk Reactor ("SDR"). SDRs are already known from literature and suitable SDRs are built, commercialized and sold in customized form by Triton Chemical Systems Ltd. and Protensive Ltd..

Scheme 1 shows one example of the principal design of an SDR.

The SDR contains a reactor apparatus including a support element which is adapted to be rotatable to an axis, the support element having a surface to which the one or more reactants, in particular the nitrile rubber is supplied, and further including feed means for supplying the nitrile rubber to the surface of the support element and hydrogen and optionally the catalyst and the co-catalyst to the reactor.

Typically the SDR is a vessel, including a support element generally in the form of at least one disk, which is mounted on a shaft rotatable around an axis. The rotatable shaft typically carries a heat transfer fluid to the inner part of the disk. The walls of the vessel itself may be heated separately from the rotating disk. One or more liquids may be fed into the vessel through one or more feed tubes being located at or close to the centre of the rotatable disk, preferably at the top of the vessel. The SDR further comprises a gas entry in order to purge the system with hydrogen, nitrogen or the choosen gas of reaction.

The disk size typically lies in the range of from 0,005 to 1 m. The disk can be either smooth, grooved, edged or meshed depending e.g. on the throughput requirements. In the preset process it has proven particularly successful to use a grooved or edged surface to enhance wave formation of the solution film when moving across the disk to enhance reactivity. In most cases the disk is fabricated from copper, however it is also possible to use stainless steel or various other metals. Copper is preferred with regard to its excellent thermal conductivity, with a thin chrome plating for chemical resistance. An SDR has typically an overall heat transfer coefficient of approximately 7-20 kW/m²K even for organic liquids.

In principle a typical system will consist of the main reactor containing the disk mounted on the rotatable shaft, a heater/cooler for the SDR walls, a heater/cooler for the SDR disk, a system controller and pumps. The system controller provides a compact integrated controller to control the disk speed, to monitor the vessel pressure and to control the feed speed from one or two integral feed pumps.

The object of the Spinning Disk Reactor is to generate a highly sheared liquid film when the liquid is applied to the unit at or near its center. The film is instantly accelerated tangentially by the shear stresses established at the disk/liquid interface. This causes the liquid to approach the disk's angular velocity and then move outward as a thinning/diverging film under the prevailing centrifugal acceleration. This force stretches and contorts the film. In more detail this means as the liquid moves towards the edge of the disk intense interfering waves are formed under the influence of the centrifugal force. This enables very high heat transfer coefficients to be realised between the disk and liquid, as well as a very high mass transfer between the liquid and the gas over the liquid. The waves formed also produce intense local mixing. The liquid flow involves very little back mixing and is therefore almost pure plug flow. The residence time is short, typically seconds. The films generated typically represent fractions of a millimeter down to a few microns. Through controlled flow and disk speed surface to volume ratios tailored to the processing requirements may be obtained, being in the range of hundredthousand of m² per m³ for lower viscosity systems.

The principle of using rotatable equipment has first been mentioned in the middle of the 1980s, the SDR technology is e.g. described in WO-A-00/48718, WO-A-00/48729, WO-A-00/048731, WO-A-00/48732, WO-A-01/60511, WO-A-01/64332, WO-A-02/066150, WO-A-03/008083, WO-A-03/008460, WO-A-2004/004888, EP-A-1 464 389, WO-A-2006/008510, WO-A-2006/018622, WO-A-2003/082456, WO-A-2002/18328, WO-A-2001/14357 and WO-A-1999/36186.

A variety of applications have already been experienced. SDR technology has e.g. been used for stripping liquids of volatiles and scrubbing gases. According to WO-A-2003/008460 SDR technology has further been successfully used to perform free radical polymerization of styrene, condensation polymerization and photopolymerization of butyl acrylate. In WO-A-00/048731 it is described that SDR technology may be used for the conversion of a substantially fluid phase substrate by heterogeneous contact with a substantially solid phase agent. Said solid phase agent is immobilised as surface of the disk and the substrate provides a film flowing substantially radially outward from the axis in dynamic contact with the agent. The solid phase agent may e.g. be inorganic oxide catalysts, metals or alloy powders which are commonly used, e.g. in oxidation or hydrogenation. Said process may be used for the conversion of organics, such as prepolymerization, polymerisation, copolymerisation, blockcopolymerisation and the like as well as low-molecular reactions like etherification, dimerisation, or alkylation.

An application of the SDR technology to conversions of polymers or to polymer-analogous reactions, in particular to conversions on a polymer backbone has never been mentioned or published in the last twenty years. Additionally no reactions under high pressures have been reported using the SDR technology. The sole disclosure of using SDRs for reactions at normal pressure has obviously prevented artisans to try reactions at high pressure.

The novel process typically uses the nitrile rubber to be hydrogenated as solution in an organic solvent.

As organic solvents dichloromethane, benzene, toluene, acetone, cyclohexane, methylethylketone ("MEK") and monochlorobenzene ("MCB") may e.g. be used. Preferably MCB is used.

The NBR solution typically has a concentration in the range of from 2 to 25 % b.w., preferably 3 to 20 % b.w., more preferably 4 to 18 % b.w., most preferably 10 to 18 % b.w..

The NBR solution is preferably handled and stored under a nitrogen blanket.

The catalyst solution is prepared separately and also stored under nitrogen. This catalyst solution contains the catalyst and, preferably, the co-catalyst.

The process according to this invention is characterized in that the nitrile rubber solution is injected into the SDR onto the support element, preferably a disk, the system is then flushed with hydrogen, the reactor apparatus heated to a temperature in the range of from 25 to 200 °C, preferably in the range of from 100 to 180°C and most preferably in the range of from 110 to 160 °C and finally the catalyst solution, containing the catalyst and, preferably a co-catalyst, is injected into the SDR, preferably onto or close to the disk and the circulation process is begun.

The speed of the disk rotation lies generally in the range of from 100 to 4000 rpm, preferably in the range of from 500 to 2500 rpm and most preferably in the range of from 1000 to 2000 rpm. The disk temperature typically lies in a range of from 25 to 200°C, preferably in a range of from 100 to 180 °C and most preferably in a range of from 140 to 160 °C.

The circulation process which begins has a typical solution circulation of 0,05 to 50 mL/s, preferably of 2 to 20 mL/s.

If desired, such SDR based hydrogenation process of nitrile rubbers may be scaled up and carried out in continuous manner by using an SDR with multiple disks or by using multiple units in series.

After the completion of the hydrogenation process the degree of hydrogenation typically lies in the range of from 20 to 100 %, preferably in the range of from 70 to 100 %, more preferably in the range of from 90 to 100 % based on the original content of C=C double bonds in the nitrile rubber.

After the completion of the conversion the reaction mixture is removed from the SDR at the bottom of the SDR. The HNBR may be recovered using normal coagulation conditions such as either steam or alcohol. For the steam process the polymer solution is introduced into a vessel (equiped for agitation and heating) containing water. At this point steam is introduced into the water in order to remove the organic solvent. With reference to the alcohol method, the HNBR solution will be poured into a vessel (equipped with agitation) filled with alcohol (like e.g. ethanol or methanol) and the mixture will be stirred for a time period sufficient to abstract the organic solvent from the polymer and into the alcohol. In certain cases alkaline additives are introduced to control the pH level.

The HNBR obtained using the hydrogenation technique of the present invention possesses a Mooney viscosity in the range of from 1 to 150, preferably 20 to 120, most preferably 30 to 80, a molecular weight Mw in the range of from 20,000 to 500,000, preferably 50,000 to 350,000, a molecular weight Mn in the range of from 10,000 to 150,000, preferably 30,000 to 100,000 and a polydispersity index PDI in the range of from 1,5 to 5, preferably 2 to 3,5.

Utilization of Spinning Disk Reactor technology leads to the generation of thin NBR films. Such generation of thin NBR films removes the catalyst diffusion issue which is one of the limiting issue in nowadays batch-wise hydrogenation of NBR. The SDR based NBR hydrogenation is characterized by high heat and mass transfer coefficients, a plug flow, intense mixing capability, short residence times and low fouling.

This process allows for an extremely efficient hydrogenation of NBR with considerably more flexible, and cheaper equipment. The SDR based hydrogenation of NBR has a low operating inventory (around 10 cm³ for a 5 m³ batch equivalent). Complex safety requirements mandatory for batch reactors used on a technical scale, like e.g. relief and blow down systems involving bursting disks and/or relief valves, dump tanks, and fire protection are not necessary, as the process provides intrinsic safety. This means that location constraints are also reduced when using the new type of hydrogenation reactor.

Furtheron, if the feed to the SDR is stopped, the residual hold up becomes very low after a few seconds. Compared to the known batch-wise NBR hydrogenation grade change times and polymer losses are very small because of the low inventory and the plug flow nature of the flow. Rather than having expensive and possibly obsolete stock, specific HNBR grades may be manufactured rapidly and just in time for customers.

The inventive process results in improved selectivity, yield and product quality. It is easy to scale-up and provides the ability to run the hydrogenation at the speed at which it may run rather than run it at the speed at which the equipment permits it to run.

A further advantage of the present process resides in the fact that the hydrogen pressure applied to the SDR is preferably chosen in the range of from 0,5 to 100 bar, preferably in the range from 0,5 to 40 bar, most preferably in the range from 10 to 30 bar. This is substantially lower than in the batch-wise NBR hydrogenation.

### Examples 1-3:

The following chemicals have been used in the Examples described below:

| | |
|---|---|
| Tris(triphenylphosphine)rhodium chloride (so called Wilkinson's hydrogenation catalyst), | from Umicore AG & Co.KG |
| Triphenylphosphine ("TPP") | from BASF Aktiengesellschaft |
| Perbunan® T 3429 | NBR rubber with an acrylonitrile content of 34 % b.w. and a Mooney-viscosity M(1+4)@100°C of 28,2, M_{w} = 255.000 g/mol, Mₙ = 77.000 g/mol, PDE = 3,31, said rubber being available from Lanxess Deutschland GmbH |
| Monochlorobenzene ("MCB") | available from Lanxess Deutschland GmbH |

A solution of 4 % b.w. Perbunan^{®} T 3429 in MCB was provided in a sealed vessel under a blanket of nitrogen. Furtheron a solution of tris(triphenylphosphine)rhodium chloride in MCB was prepared and triphenylphosphine as co-catalyst added. The catalyst-loading is given in the below Table 1. The amount of triphenylphosphine added was 1 % b.w. based on 100 %b.w. of the nitrile rubber.

All reactions were carried out in a stainless steal spinning disk (SDR) reactor of Protensive Limited, having the same design as outlined in Scheme 1 below. The SDR was equipped with an 11 cm disk.

The general reaction procedure followed in Examples 1-3 was as follows:
1. The solution of 4 % b.w. of Perbunan ^{®} T 3429 under a nitrogen blanket was injected into the SDR vessel which itself was under a nitrogen blanket.
2. The SDR was heated to a temperature of 100°C (vessel temperature and disk temperature).
3. The disk rotational speed (rpm) was set to 1000.
4. The catalyst solution, containing the catalyst and the co-catalyst, following nitrogen-purging was injected onto the disk.
5. Hydrogen pressure was added to a desired level as mentioned below in Table 1 for the time also indicated below in Table 1.
6. The disk temperature was adjusted as indicated below in Table 1.
7. The circulation process was begun with a solution circulation of 2 mL/s.
8. When the reaction was complete the H₂ pressure was removed and the solution drained from the vessel.
9. The SDR was then cleaned with MCB.

**Table 1: Reaction parameters**

| **Example** | **Hydrogen pressure (bar)** | **Catalyst Loading (phr)** | **Disk Temperature (°C)** | **Time (min)** |
|---|---|---|---|---|
| 1 | 10 | 0,36 | 135 | 240 |
| 2 | 3,5 | 0,36 | 135 | 240 |
| 3 | 9,8 | 0,60 | 150 | 240 |

The molecular weights M_{w}, Mₙ, the polydispersity PDI and the solution viscosity of the HNBR obtained in Exampels 1-3 are listed in the following Table 2.

The solution viscosity was measured by Brookfield Viscosity technique.
The Brookfield Viscometer instrument purchased from Brookfield Engineering (www.brookfieldengineering.com) was of type model LVDV-II + Pro. The Brookfield Viscometer was equipped with LV spindles of which spindle LV-2 (S62) was utilized for the testing process of those values reported in Table 2. The examples listed in Table 2 were diluted to 4% total solids prior to viscosity testing. During testing the Brookfield viscometer was set to a speed of 60rpm and the temperature of the solution was held at 22°C +/- 1°C.

**Table 2: Results**

| **Example** | **Mₙ (g/mol)** | **M_{w}** | **PDI** | **Solution Viscosity (cP)** | **RDB¹ [%]** |
|---|---|---|---|---|---|
| Perbunan ^{®} T 3429 | 72000 | 235000 | 3,27 | 19,0 | --- |
| 1 | 69000 | 143000 | 2,09 | 90,5 | 6,0 |
| 2 | 62000 | 139000 | 2,23 | 40,5 | 25,4 |
| 3 | 81000 | 161000 | 1,99 | 91,0 | 0,9 |

| | | | | | |
|---|---|---|---|---|---|
| ¹ "RDB" means remaining C=C double bonds in % based on the original amount of C=C double bonds in the starting material Perbunan® T 3429 | | | | | |

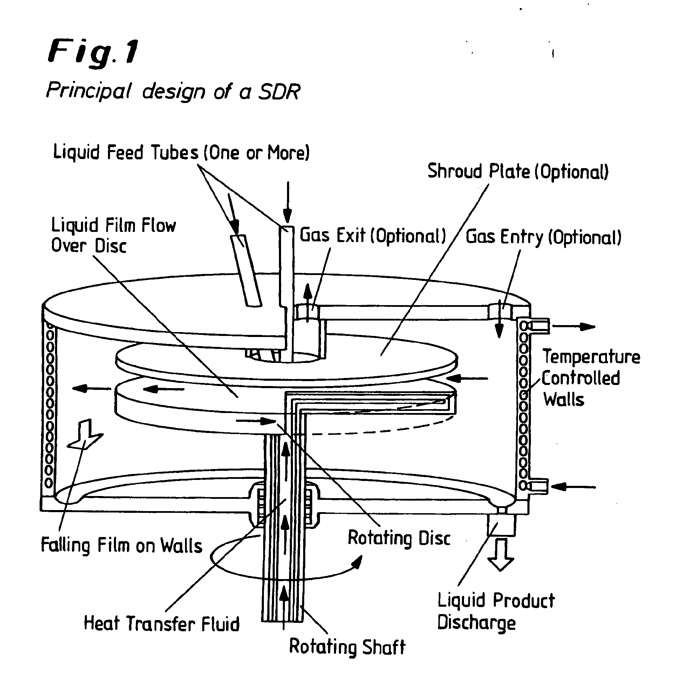

## Claims

1. A process for preparing a hydrogenated nitrile rubber by subjecting a nitrile rubber in a spinning disk reactor to hydrogenation.

2. The process according to claim 1, **characterized in that** the nitrile rubber represents an elastomer having repeating units derived from at least one conjugated diene, at least one α,β-unsaturated nitrile, and optionally one or more further copolymerizable monomers.

3. The process according to claim 1 or 2, **characterized in that** the hydrogenation of the nitrile rubber is carried out in the presence of a hydrogenation catalyst, preferably in the presence of a homogeneous hydrogenation catalyst.

4. The process according to one or more of claims 1 to 3, **characterized in that** the hydrogenation of the nitrile rubber is carried out in the presence of a homogeneous catalyst on the basis of rhodium, ruthenium, titanium, platinum, iridium, palladium, rhenium, osmium, cobalt or copper either as metal or preferably in form of metal compounds.

5. The process according to one or more of claims 1 to 4, **characterized in that** the hydrogenation of the nitrile rubber is carried out in the presence of a rhodium or ruthenium containing catalyst, preferably in the presence of a catalyst of the following general formula (I)
(R¹ₘB)ₗMXₙ (I)
wherein
M is ruthenium or rhodium,
R¹ are different or equal and represent C₁-C₈-alkyl, C₄-C₈-cycloalkyl, C₆-C₁₅-aryl or C₇-C₁₅-aralkyl,
B is phosphorus, arsenic, sulphur or a sulphoxide group (S=O),
X is hydrogen or an anion, preferably halogen and more preferably chlorine or bromine,
l is 2, 3 or 4,
m is 2 or 3 and
n is 1, 2 or 3, preferably 1 or 3.

6. The process according to one or more of claims 1 to 5, **characterized in that** the hydrogenation of the nitrile rubber is carried out in the presence of tris(triphenylphosphine)-rhodium(I)-chloride, tris(triphenylphosphine)-rhodium(III)-chloride, tris(dimethylsulfoxid)-rhodium(III)-chloride, tetrakis(triphenyl phosphine)-rhodium-hydride, and the corresponding compounds in which the triphenylphosphine moiety is partially or completely replaced by tricyclohexylphosphine.

7. The process according to one or more of claims 1 to 6, **characterized in that** the hydrogenation of the nitrile rubber is carried out in the presence of a co-catalyst, preferably having the general formula (II)
R^{l}ₘB (II)
wherein R¹, m and B shall have the same meanings as for the general formula (I), preferably m is 3, B is phosphorus and the substituents R¹ are different or equal and represent C₁-C₈-alkyl, C₄-C₈-cycloalkyl, C₆-C₁₅-aryl or C₇-C₁₅-aralkyl.

8. The process according to one or more of claims 1 to 7, **characterized in that** the SDR contains a reactor apparatus including a support element which is adapted to be rotatable to an axis, the support element having a surface to which the nitrile rubber is supplied, and further including feed means for supplying the nitrile rubber to the surface of the support element and hydrogen and optionally the catalyst and the co-catalyst to the reactor.

9. The process according to one or more of claims 1 to 8, **characterized in that** the SDR contains a vessel including (i) a support element in the form of at least one disk which is mounted on a rotatable shaft carrying a heat transfer fluid to the inner part of the disk,(ii) one or more feed tubes being located at or close to the centre of the rotatable disk, preferably at the top of the vessel, (iii) a separate heating possibility of the walls of the vessel and the rotating disk, and (iv) a gas entry to purge the system with hydrogen and/or nitrogen.

10. The process according to claim 9, **characterized in that** the disk size lies in the range of from 0,005 to 1 m.

11. The process according to one or more of the claims 1 to 10, **characterized in that** the nitrile rubber is used as solution in an organic solvent, preferably in dichloromethane, benzene, toluene, acetone, cyclohexane, methylethylketone ("MEK") or monochlorobenzene ("MCB").

12. The process according to claim 11, **characterized in that** the nitrile rubber solution has a concentration in the range of from 2 to 25 % b.w., preferably 3 to 20 % b.w., more preferably 4 to 18 % b.w., and most preferably 10 to 18 % b.w.

13. The process according to one or more of the claims 8 to 12, **characterized in that** the nitrile rubber solution is injected into the SDR onto the support element, preferably the disk, the system is flushed with hydrogen, the reactor apparatus is heated to a temperature in the range of from 25 to 200 °C, preferably in the range of from 100 to 180°C and most preferably in the range of from 110 to 160 °C and finally the catalyst solution, containing the catalyst and, preferably a co-catalyst, is injected into the SDR, preferably onto or close to the support element, preferably the disk, and the circulation process is begun.

14. The process according to one or more of the claims 1 to 13, **characterized in that** the catalyst is used in an amount in the range from 0,005 - 1 % b.w., preferably in the range from 0,01 - 0,5 % b.w. and more preferably in the range from 0,02 - 0,1 % b.w., based on 100 % b.w. of the nitrile rubber to be hydrogenated.

15. The process according to one or more of the claims 1 to 14, **characterized in that** 0,1 to 33 % b.w. of the co-catalyst, preferably 0,5 to 20 % b.w. and even more preferably 0,5 to 5 % b.w. of the co-catalyst are used, based on 100 % b.w. of the nitrile rubber to be hydrogenated.

16. The process according to one or more of the claims 8 to 15, **characterized in that** the speed of the disk rotation lies in the range of from 100 to 4000 rpm, preferably in the range of from 500 to 2500 rpm and most preferably in the range of from 1000 to 2000 rpm and the disk temperature in a range of from 25 to 200°C, preferably in a range of from 100 to 180 °C and most preferably in a range of from 140 to 160 °C.

17. The process according to one or more of the claims 13 to 16, **characterized in that** the circulation process which begins has a solution circulation of 0,05 to 50 mL/s, preferably of 2 to 20 mL/s.

18. The process according to one or more of the claims 1 to 17, **characterized in that** the hydrogen pressure applied to the SDR lies in the range of from 0,5 to 100 bar, preferably in the range of from 0,5 to 40 bar, and most preferably in the range of from 10 to 30 bar.

## Patentansprüche

1. Verfahren zur Herstellung eines hydrierten Nitrilkautschuks durch Hydrieren eines Nitrilkautschuks in einem Spinning-Disk-Reaktor.

2. Verfahren nach Anspruch 1, **dadurch gekennzeichnet, dass** der Nitrilkautschuk ein Elastomer mit Wiederholungseinheiten, die sich von mindestens einem konjugierten Dien, mindestens einem α,β-ungesättigten Nitril und gegebenenfalls einem oder mehreren weiteren copolymerisierbaren Monomeren ableiten, darstellt.

3. Verfahren nach Anspruch 1 oder 2, **dadurch gekennzeichnet, dass** man die Hydrierung des Nitrilkautschuks in Gegenwart eines Hydrierkatalysators, vorzugsweise in Gegenwart eines homogenen Hydrierkatalysators, durchführt.

4. Verfahren nach einem oder mehreren der Ansprüche 1 bis 3, **dadurch gekennzeichnet, dass** man die Hydrierung des Nitrilkautschuks in Gegenwart eines homogenen Katalysators auf Basis von Rhodium, Ruthenium, Titan, Platin, Iridium, Palladium, Rhenium, Osmium, Cobalt oder Kupfer entweder als Metall oder vorzugsweise in Form von Metallverbindungen durchführt.

5. Verfahren nach einem oder mehreren der Ansprüche 1 bis 4, **dadurch gekennzeichnet, dass** man die Hydrierung des Nitrilkautschuks in Gegenwart eines rhodium- oder rutheniumhaltigen Katalysators, vorzugsweise in Gegenwart eines Katalysators der folgenden allgemeinen Formel (I), durchführt:
(R¹ₘB)ₗMXₙ (I)
worin
M für Ruthenium oder Rhodium steht,
R¹ gleich oder verschieden sind und für C₁-C₈-Alkyl, C₄-C₈-Cycloalkyl, C₆-C₁₅-Aryl oder C₇-C₁₅-Aralkyl stehen,
B für Phosphor, Arsen, Schwefel oder eine Sulfooxidgruppe (S=O) steht,
X für Wasserstoff oder ein Anion, vorzugsweise Halogen und weiter bevorzugt Chlor oder Brom, steht,
1 für 2, 3 oder 4 steht,
m für 2 oder 3 steht und
n für 1, 2 oder 3, vorzugsweise 1 oder 3, steht.

6. Verfahren nach einem oder mehreren der Ansprüche 1 bis 5, **dadurch gekennzeichnet, dass** man die Hydrierung des Nitrilkautschuks in Gegenwart von Tris(triphenylphosphin)rhodium(I)-chlorid, Tris-(triphenylphosphin)rhodium(III)-chlorid, Tris-(dimethylsulfoxid)rhodium(III)-chlorid, Tetrakis-(triphenylphosphin)rhodiumhydrid und den entsprechenden Verbindungen, in denen die Triphenylphosphin-Einheit teilweise oder ganz durch Tricyclohexylphosphin ersetzt ist, durchführt.

7. Verfahren nach einem oder mehreren der Ansprüche 1 bis 6, **dadurch gekennzeichnet, dass** man die Hydrierung des Nitrilkautschuks in Gegenwart eines Cokatalysators durchführt, der vorzugsweise die folgende allgemeine Formel (II) aufweist:
R¹ₘB (II)
worin R¹, m und B die gleichen Bedeutungen wie für die allgemeine Formel (I) besitzen, vorzugsweise m für 3 steht, B für Phosphor steht und die Substituenten R¹ gleich oder verschieden sind und für C₁-C₈-Alkyl, C₄-C₈-Cycloalkyl, C₆-C₁₅-Aryl oder C₇-C₁₅-Aralkyl stehen.

8. Verfahren nach einem oder mehreren der Ansprüche 1 bis 7, **dadurch gekennzeichnet, dass** der SDR eine Reaktorapparatur mit einem um eine Achse rotierbar ausgeführten Trägerelement mit einer Fläche, der der Nitrilkautschuk zugeführt wird, aufweist und ferner Zuführungsmittel zur Zuführung des Nitrilkautschuks zu der Fläche des Trägerelements und von Wasserstoff und gegebenenfalls dem Katalysator und dem Cokatalysator zum Reaktor aufweist.

9. Verfahren nach einem oder mehreren der Ansprüche 1 bis 8, **dadurch gekennzeichnet, dass** der SDR ein Gefäß mit (i) einem Trägerelement in Form von mindestens einer Scheibe, die auf einer rotierbaren Welle, die ein Wärmeübertragungsfluid in den inneren Teil der Scheibe trägt, angebracht ist, (ii) einem oder mehreren Zufürungsrohren, die sich in oder in der Nähe der Mitte der rotierbaren Scheibe, vorzugsweise an der Oberseite des Gefäßes, befinden, (iii) einer separaten Beheizungsmöglichkeit der Wände des Gefäßes und der rotierenden Scheibe und (iv) einem Gaseingang zum Spülen des Systems mit Wasserstoff und/oder Stickstoff enthält.

10. Verfahren nach Anspruch 9, **dadurch gekennzeichnet, dass** die Scheibengröße im Bereich von 0,005 bis 1 m liegt.

11. Verfahren nach einem oder mehreren der Ansprüche 1 bis 10, **dadurch gekennzeichnet, dass** man den Nitrilkautschuk als Lösung in einem organischen Lösungsmittel, vorzugsweise in Dichlormethan, Benzol, Toluol, Aceton, Cyclohexan, Methylethylketon ("MEK") oder Monochlorbenzol ("MCB"), verwendet.

12. Verfahren nach Anspruch 11, **dadurch gekennzeichnet, dass** die Nitrilkautschuklösung eine Konzentration im Bereich von 2 bis 25 Gew.-%, vorzugsweise 3 bis 20 Gew.-%, weiter bevorzugt 4 bis 18 Gew.-% und ganz besonders bevorzugt 10 bis 18 Gew.-%, aufweist.

13. Verfahren nach einem oder mehreren der Ansprüche 8 bis 12, **dadurch gekennzeichnet, dass** man die Nitrilkautschuklösung in den SDR auf das Trägerelement, vorzugsweise die Scheibe, einleitet, das System mit Wasserstoff spült, die Reaktorapparatur auf eine Temperatur im Bereich von 25 bis 200°C, vorzugsweise im Bereich von 100 bis 180°C und ganz besonders bevorzugt im Bereich von 110 bis 160°C erhitzt und schließlich die Katalysatorlösung, die den Katalysator und vorzugsweise einen Cokatalysator enthält, in den SDR einleitet, vorzugsweise auf oder in die Nähe des Trägerelements, vorzugsweise die Scheibe, und den Zirkulationsprozess beginnt.

14. Verfahren nach einem oder mehreren der Ansprüche 1 bis 13, **dadurch gekennzeichnet, dass** man den Katalysator in einer Menge im Bereich von 0,005 - 1 Gew.-%&, vorzugsweise im Bereich von 0,01 - 0,5 Gew.-% und weiter bevorzugt im Bereich von 0,02 - 0,1 Gew.-%, bezogen auf 100 Gew.-% des zu hydrierenden Nitrilkautschuks, verwendet.

15. Verfahren nach einem oder mehreren der Ansprüche 1 bis 14, **dadurch gekennzeichnet, dass** man 0,1 bis 33 Gew.-% des Cokatalysators, vorzugsweise 0,5 bis 20 Gew.-% und noch weiter bevorzugt 0,5 bis 5 Gew.-% des Cokatalysators, bezogen auf 100 Gew.-% des zu hydrierenden Nitrilkautschuks, verwendet.

16. Verfahren nach einem oder mehreren der Ansprüche 8 bis 15, **dadurch gekennzeichnet, dass** die Geschwindigkeit der Scheibenrotation im Bereich von 100 bis 4000 U/min, vorzugsweise im Bereich von 500 bis 2500 ppm und ganz besonders bevorzugt im Bereich von 1000 bis 2000 U/min liegt und die Scheibentemperatur im Bereich von 25 bis 200°C, vorzugsweise im Bereich von 100 bis 180°C und ganz besonders bevorzugt im Bereich von 140 bis 160°C liegt.

17. Verfahren nach einem oder mehreren der Ansprüche 13 bis 16, **dadurch gekennzeichnet, dass** der beginnende Zirkulationsprozess eine Lösungszirkulation von 0,05 bis 50 mL/s, vorzugsweise 2 bis 20 mL/s, aufweist.

18. Verfahren nach einem oder mehreren der Ansprüche 1 bis 17, **dadurch gekennzeichnet, dass** der an den SDR angelegte Druck im Bereich von 0,5 bis 100 bar, vorzugsweise im Bereich von 0,5 bis 40 bar und ganz besonders bevorzugt im Bereich von 10 bis 30 bar liegt.

## Revendications

1. Procédé de préparation d'un caoutchouc nitrile hydrogéné consistant à soumettre un caoutchouc nitrile dans un réacteur à disque rotatif à une hydrogénation.

2. Procédé selon la revendication 1, **caractérisé en ce que** le caoutchouc nitrile représente un élastomère comportant des motifs récurrents dérivés d'au moins un diène conjugué, d'au moins un nitrile α,β-insaturé, et éventuellement d'un ou plusieurs monomères copolymérisables supplémentaires.

3. Procédé selon la revendication 1 ou 2, **caractérisé en ce que** l'hydrogénation du caoutchouc nitrile est réalisée en présence d'un catalyseur d'hydrogénation, de préférence en présence d'un catalyseur d'hydrogénation homogène.

4. Procédé selon une ou plusieurs des revendications 1 à 3, **caractérisé en ce que** l'hydrogénation du caoutchouc nitrile est réalisée en présence d'un catalyseur homogène à base de rhodium, de ruthénium, de titane, de platine, d'iridium, de palladium, de rhénium, d'osmium, de cobalt ou de cuivre, soit sous forme de métal soit, de préférence, sous forme de composés métalliques.

5. Procédé selon une ou plusieurs des revendications 1 à 4, **caractérisé en ce que** l'hydrogénation du caoutchouc nitrile est réalisée en présence d'un catalyseur contenant du rhodium ou du ruthénium, de préférence en présence d'un catalyseur de formule générale (I) suivante
(R¹ₘB)₁MXₙ (I)
dans laquelle
M représente le ruthénium ou le rhodium,
les R¹ sont différents ou identiques et représentent un groupe alkyle en C₁-C₈, cycloalkyle en C₄-C₈, aryle en C₆-C₁₅ ou aralkyle en C₇-C₁₅,
B représente le phosphore, l'arsenic, le soufre ou un groupe sulfoxyde (S=O),
X représente un atome d'hydrogène ou un anion, de préférence halogène et de façon plus préférée chlore ou brome,
l est égal à 2, 3 ou 4,
m est égal à 2 ou 3 et
n est égal à 1, 2 ou 3, de préférence à 1 ou 3.

6. Procédé selon une ou plusieurs des revendications 1 à 5, **caractérisé en ce que** l'hydrogénation du caoutchouc nitrile est réalisée en présence de chlorure de tris(triphénylphosphine)-rhodium(I), de chlorure de tris(triphénylphosphine)-rhodium(III), de chlorure de tris(diméthylsulfoxyde)-rhodium(III), d'hydrure de tétrakis(triphénylphosphine)-rhodium, et des composés correspondants dans lesquels le groupement triphénylphosphine est partiellement ou complètement remplacé par un groupement tricyclohexylphosphine.

7. Procédé selon une ou plusieurs des revendications 1 à 6, **caractérisé en ce que** l'hydrogénation du caoutchouc nitrile est réalisée en présence d'un co-catalyseur, de préférence répondant à la formule générale (II)
R¹ₘB (II)
dans laquelle R¹, m et B auront les mêmes définitions que pour la formule générale (I), de préférence m est égal à 3, B représente le phosphore et les substituants R¹ sont différents ou identiques et représentent un groupe alkyle en C₁-C₈, cycloalkyle en C₄-C₈, aryle en C₆-C₁₅ ou aralkyle en C₇-C₁₅.

8. Procédé selon une ou plusieurs des revendications 1 à 7, **caractérisé en ce que** le réacteur à disque rotatif contient un appareil réacteur comportant un élément de support qui est conçu pour pouvoir tourner autour d'un axe, l'élément de support ayant une surface sur laquelle le caoutchouc nitrile est amené, et comportant en outre un dispositif d'alimentation permettant d'amener le caoutchouc nitrile sur la surface de l'élément de support et l'hydrogène et éventuellement le catalyseur et le co-catalyseur dans le réacteur.

9. Procédé selon une ou plusieurs des revendications 1 à 8, **caractérisé en ce que** le réacteur à disque rotatif contient un récipient comportant (i) un élément de support sous la forme d'au moins un disque qui est monté sur un arbre rotatif portant un fluide caloporteur dans la partie interne du disque, (ii) un ou plusieurs tubes d'alimentation qui sont situés au centre ou près du centre du disque rotatif, de préférence au sommet du récipient, (iii) un moyen de chauffage séparé des parois du récipient et du disque rotatif, et (iv) une entrée de gaz permettant de purger le système avec de l'hydrogène et/ou de l'azote.

10. Procédé selon la revendication 9, **caractérisé en ce que** la taille du disque se situe dans la fourchette de 0,005 à 1 m.

11. Procédé selon une ou plusieurs des revendications 1 à 10, **caractérisé en ce que** le caoutchouc nitrile est utilisé en solution dans un solvant organique, de préférence dans le dichlorométhane, le benzène, le toluène, l'acétone, le cyclohexane, la méthyléthylcétone ("MEK") ou le monochlorobenzène ("MCB").

12. Procédé selon la revendication 11, **caractérisé en ce que** la solution de caoutchouc nitrile a une concentration dans la fourchette de 2 à 25 % en poids, de préférence de 3 à 20 % en poids, de façon plus préférée de 4 à 18 % en poids, et de façon la plus préférée de 10 à 18 % en poids.

13. Procédé selon une ou plusieurs des revendications 8 à 12, **caractérisé en ce que** la solution de caoutchouc nitrile est injectée dans le réacteur à disque rotatif sur l'élément de support, de préférence le disque, le système est balayé avec de l'hydrogène, l'appareil réacteur est chauffé à une température dans la fourchette de 25 à 200 °C, de préférence dans la fourchette de 100 à 180°C et de façon la plus préférée dans la fourchette de 110 à 160 °C, et enfin la solution de catalyseur, contenant le catalyseur et, de préférence, un co-catalyseur, est injectée dans le réacteur à disque rotatif, de préférence sur ou près de l'élément de support, de préférence le disque, et le procédé de circulation est commencé.

14. Procédé selon une ou plusieurs des revendications 1 à 13, **caractérisé en ce que** le catalyseur est utilisé dans une quantité dans la fourchette de 0,005 - 1 % en poids, de préférence dans la fourchette de 0,01 - 0,5 % en poids et de façon plus préférée dans la fourchette de 0,02 - 0,1 % en poids, pour 100 % en poids du caoutchouc nitrile à hydrogéner.

15. Procédé selon une ou plusieurs des revendications 1 à 14, **caractérisé en ce que** l'on utilise 0,1 à 33 % en poids du co-catalyseur, de préférence 0,5 à 20 % en poids et de façon encore plus préférée 0,5 à 5 % en poids du co-catalyseur, pour 100 % en poids du caoutchouc nitrile à hydrogéner.

16. Procédé selon une ou plusieurs des revendications 8 à 15, **caractérisé en ce que** la vitesse de rotation du disque se situe dans la fourchette de 100 à 4000 tours/min, de préférence dans la fourchette de 500 à 2500 tours/min et de façon la plus préférée dans la fourchette de 1000 à 2000 tours/min, et la température du disque dans une fourchette de 25 à 200°C, de préférence dans une fourchette de 100 à 180 °C et de façon la plus préférée dans une fourchette de 140 à 160 °C.

17. Procédé selon une ou plusieurs des revendications 13 à 16, **caractérisé en ce que** le procédé de circulation qui commence présente une circulation de la solution de 0,05 à 50 mL/s, de préférence de 2 à 20 mL/s.

18. Procédé selon une ou plusieurs des revendications 1 à 17, **caractérisé en ce que** la pression d'hydrogène appliquée au réacteur à disque rotatif se situe dans la fourchette de 0,5 à 100 bars, de préférence dans la fourchette de 0,5 à 40 bars, et de façon la plus préférée dans la fourchette de 10 à 30 bars.
